# EUROPÄISCHE PATENTSCHRIFT

(11) **EP 4 335 732 B1**
(45) Veröffentlichungstag und Bekanntmachung des Hinweises auf die Patenterteilung: **04.02.2026**
(21) Anmeldenummer: 23186769.8
(22) Anmeldetag: 20.07.2023
(51) Int. Cl.: B62D 55/088, B62D 55/12

(54) **RAUPENLAUFWERK**
CRAWLER DRIVE
CHENILLE

(30) Priorität: 06.09.2022 DE 102022122572
(43) Veröffentlichungstag der Anmeldung: 13.03.2024
(73) Patentinhaber: CLAAS Industrietechnik GmbH, 33106 Paderborn (DE)
(72) Erfinder: Berkemann, Stephan, 32660 Detmold (DE); Wagemann, Sebastian, 59302 Oelde-Sünninghausen (DE); Riemer, Andre, 33102 Paderborn (DE)
(74) Vertreter: CLAAS Gruppe

(56) Entgegenhaltungen:
- EP-A1- 3 415 407
- CN-U- 214 930 191
- US-A1- 2002 167 222

## Beschreibung

Die Erfindung betrifft ein Raupenlaufwerk einer landwirtschaftlichen Arbeitsmaschine mit einem Antriebsrad gemäß dem Oberbegriff des Anspruchs 1.

Landwirtschaftliche Arbeitsmaschinen, wie beispielsweise Traktoren oder selbstfahrende Erntemaschinen, werden zunehmend größer und leistungsstärker konstruiert, um eine effizientere Bearbeitung von landwirtschaftlichen Flächen zu ermöglichen. Dabei steigt mit dem Eigengewicht der Arbeitsmaschinen auch das zulässige Gesamtgewicht an, welches auf dem Boden abgestützt werden muss. Ein hohes Gesamtgewicht ermöglicht dabei oftmals auch eine hohe Ballastierung der landwirtschaftlichen Arbeitsmaschine, welche je nach durchzuführenden Arbeiten variabel an der Arbeitsmaschine angeordnet sein kann, beispielsweise um eine Verlagerung des Schwerpunktes der Arbeitsmaschine zu beeinflussen. Um hierbei eine nachteilige Bodenverdichtung möglichst zu vermeiden, ist es erstrebenswert die Aufstandsfläche am Boden zu vergrößern, wobei bei luftgefüllten Rädern mit zunehmender Aufstandsfläche auch der Durchmesser der Räder ansteigt, wodurch der benötigte Bauraum ansteigt.

Daher werden zunehmend Raupenlaufwerke mit einer konstruktionsbedingt hohen Aufstandsfläche eingesetzt, welche beispielsweise ein Raupenband aus einem elastischen Werkstoff wie Gummi aufweisen. Das Raupenlaufwerk weist dabei üblicherweise ein Triebrad zum beispielsweise kraftschlüssigen bzw. reibschlüssigen Antrieb des Raupenbandes sowie mindestens ein Laufrad und dazwischen angeordnete Stützrollen auf. Nachteilig bei dem Einsatz von derartigen Raupenlaufwerken ist eine mögliche Beeinträchtigung der Kraftübertragung zwischen dem Antriebsrad und dem Raupenband durch reibungsreduzierende Materialien wie Dreck, Schlamm, Lehm oder sonstigen Verschmutzungen.

Zur Reduzierung dieser Verschmutzung ist beispielsweise aus der EP 3 415 407 A1 ein Antriebsrad bekannt, welches radial außenseitig beabstandet angeordnete Reibflächen zur Kraftübertragung von dem Antriebsrad auf das Raupenband und Ausnehmungen zur Ableitung von Verschmutzungen aufweist. Durch die Ausnehmungen können zwischen dem Antriebsrad und dem Raupenband angeordnete Verschmutzungen, welche eine Kraftübertragung beeinträchtigen, entfernt werden. Bei besonders starken Verschmutzungen, beispielsweise bei oder nach einem zumindest teilweisen Einsinken des Raupenlaufwerkes in einen nassen, weichen Untergrund, kann es dazu kommen, dass Verschmutzungen nicht zuverlässig abgeleitet werden können. Eine feuchte oder verschmutzte Oberfläche der Reibflächen oder der Innenseite des Raupenbands mit der die Reibflächen zusammenwirken, kann dazu führen, dass verstärkt Schlupf zwischen den Reibflächen des Antriebsrads und dem Raupenband auftritt.

Aus der US 2002/167222 A1 ist weiterhin ein Raupenlaufwerk mit den oberbegrifflichen Merkmalen bekannt.

Es ist deshalb Aufgabe der Erfindung, die beschriebenen Nachteile des Standes der Technik zu vermeiden und insbesondere den zwischen dem Antriebsrad und dem Raupenband auftretenden Schlupf deutlich zu reduzieren.

Diese Aufgabe wird erfindungsgemäß durch die kennzeichnenden Merkmale des Anspruchs 1 gelöst.

Gemäß dem Anspruch 1 wird ein Raupenlaufwerk einer landwirtschaftlichen Arbeitsmaschine mit einem Antriebsrad zum Antreiben eines elastischen Raupenbandes des Raupenlaufwerkes vorgeschlagen, wobei radial außen an dem Antriebsrad Reibelemente zum kraftschlüssigen Zusammenwirken mit dem Raupenband, insbesondere lösbar, angeordnet sind, wobei radial außen an dem Antriebsrad benachbart zu zumindest einem Reibelement zumindest ein verschleißhartes Element angeordnet ist.

Die Erfindung hat viele Vorteile. Das zumindest eine verschleißharte Element ist ebenfalls zum kraftschlüssigen Zusammenwirken mit dem Raupenband vorgesehen und eingerichtet. Das zumindest eine verschleißharte Element weist gegenüber dem Reibelement eine größere Formstabilität auf. Dies bewirkt, insbesondere im rutschigen Umfeld, eine verbesserte kraftschlüssige Übertragung einer Antriebskraft von dem Antriebsrad auf das elastische Raupenband. Dadurch, dass das verschleißharte Element gegenüber dem Reibelement eine erhöhte Formstabilität aufweist, wirken die scharfen Kanten des verschleißharten Elements beim Auftreffen auf das Raupenband reinigend auf die Innenseite des Gummilaufbands. Weiterhin bewirkt die erhöhte Formstabilität, dass sich die verschleißharten Elemente tiefer in die Innenfläche des Raupenbands eindrücken und somit eine bessere Kraftübertragung ermöglichen. Um übermäßigen Verschleiß an dem Raupenband durch die verschleißharten Elemente zu vermeiden, sind neben den verschleißharten Elementen zusätzlich Reibelemente radial außenseitig auf dem Antriebsrad angeordnet, die eine geringere Formstabilität aufweisen und somit weniger abrasiv auf das Raupenband einwirken.

Erfindungsgemäß ist vorgesehen, dass das zumindest eine verschleißharte Elemente gegenüber den Reibelementen eine größere Festigkeit aufweist. Hierdurch wird erreicht, dass die verschleißharten Elemente formstabiler als die Reibelemente ausgebildet sind.

Eine weitere vorteilhafte Ausgestaltung sieht vor, dass das zumindest eine verschleißharte Element aus Metall, insbesondere Aluminium, besteht. Insbesondere Aluminium hat sich als besonders vorteilhaft zur Übertragung der Antriebskraft von dem Antriebsrad auf das Raupenband erwiesen. Vorzugsweise bestehen die Reibelemente aus einem Elastomer, insbesondere Gummi.

Erfindungsgemäß umfasst das Antriebsrad zwei in axialer Richtung nebeneinander angeordnete Felgen umfassen, wobei die Felgen jeweils Reibelemente und jeweils zumindest ein verschleißhartes Element umfassen, wobei sich die Reibelemente und das zumindest eine verschleißharte Element einer Felge in axialer Richtung über die gesamte Breite der jeweiligen Felge erstrecken. Hierdurch wird ermöglicht, dass das Raupenband mittels Führungsblöcken zwischen den Felgen führbar ist, wobei die Erstreckung der Reibelemente und verschleißharten Elemente in axialer Richtung über die gesamte Breite der jeweiligen Felgen eine besonders wirksame Übertragung der Antriebskraft auf das Raupenband ermöglicht.

Gemäß einer weiteren vorteilhaften Weiterbildung kann das Antriebsrad eine Mehrzahl von Reibelementen und verschleißharten Elementen umfassen, die in Umfangsrichtung des Antriebsrads abwechselnd zueinander angeordnet sind, wobei vorzugsweise neben zwei benachbarten Reibelementen jeweils ein verschleißhartes Element angeordnet ist, wobei weiter vorzugsweise die Reibelemente und verschleißharten Elemente alternierend zueinander angeordnet sind, sodass in Umfangsrichtung des Antriebsrads auf jedes Reibelement ein verschleißhartes Element folgt. Aus iterativen Versuchen hat sich gezeigt, dass eine abwechselnde Anordnung und insbesondere eine alternierende Anordnung der Reibelemente besonders zur Vermeidung von Schlupf zwischen dem Antriebsrad und dem Raupenband geeignet ist.

Eine verschleißoptimierte Ausgestaltung sieht vor, dass ausschließlich das Antriebsrad des Raupenlaufwerks verschleißharte Elemente zum Zusammenwirken mit dem Raupenband umfasst.

Vorzugsweise können die verschleißharten Elemente an ihrer mit dem Raupenband zusammenwirkenden Kontaktfläche eine Profilierung, wobei vorzugsweise die Profilierung eine Mehrzahl von Nuten aufweist, sodass im Bereich der Kontaktfläche zwischen den Raupenband und den verschleißharten Elementen befindliche Feuchtigkeit oder Verschmutzungen durch die Nuten entweichen kann. Die Reibelemente können ebenfalls eine Profilierung aufweisen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: Eine schematische Ansicht einer landwirtschaftlichen Arbeitsmaschine mit zwei erfindungsgemäßen Raupenlaufwerken;
- Figur 2: Eine perspektivische Ansicht eines der Raupenlaufwerk der Arbeitsmaschine gemäß Figur 1;
- Figur 3: Eine perspektivische Ansicht eines Hauptrades des Raupenlaufwerks gemäß Figur 2.

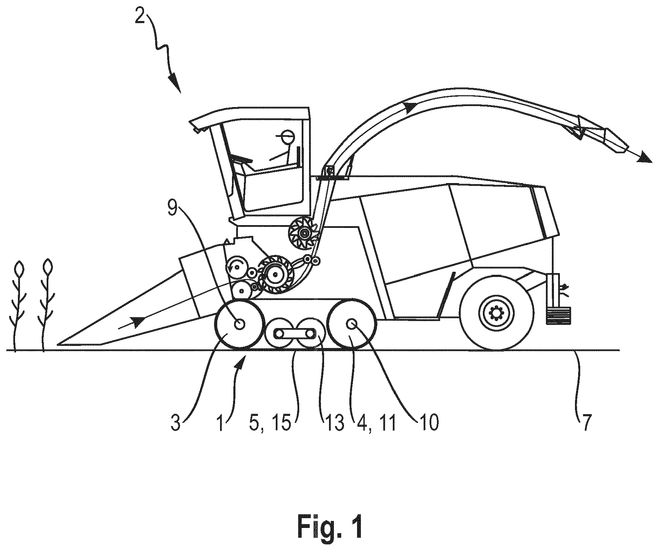

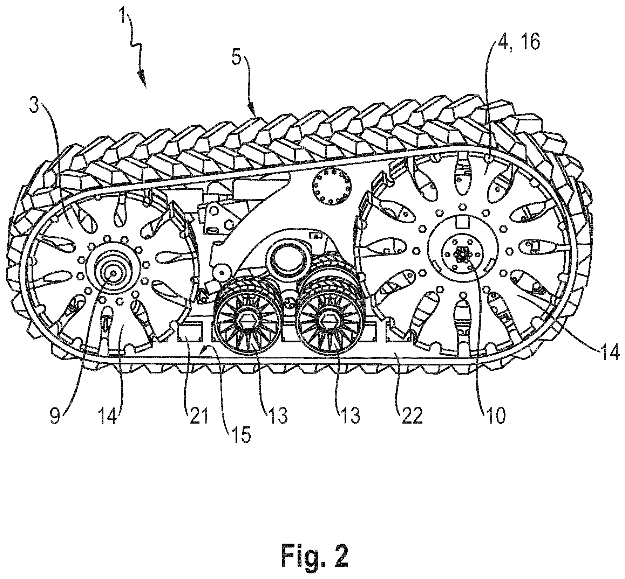

Ein Ausführungsbeispiel, das in den Figuren 1 bis 3 dargestellt ist, zeigt ein erfindungsgemäßes Raupenlaufwerk 1, wie es beispielsweise bei einer landwirtschaftlichen Arbeitsmaschine 2 zur Anwendung kommen kann, die in Figur 1 dargestellt ist. Bei der landwirtschaftlichen Arbeitsmaschine 2 handelt es sich hier um einen Feldhäcksler, mittels dessen auf einem Untergrund 7 aufstehendes Erntegut erntbar ist. Die landwirtschaftliche Arbeitsmaschine 2 kann aber auch als Traktor oder Mähdrescher ausgeführt sein. Die Arbeitsmaschine 2 ist mit zwei Raupenlaufwerken 1 ausgestattet, die jeweils an einander gegenüberliegenden Seiten der Arbeitsmaschine 2 angeordnet sind. Die Raupenlaufwerke 1 ergeben sich besonders gut anhand von Figur 2. Im Weiteren wird lediglich eines der Raupenlaufwerke 1 im Detail beschrieben.

Das Raupenlaufwerk 1 umfasst zwei einander gegenüberliegende Haupträder 3, 4, die in Längsrichtung des Raupenlaufwerks 1 betrachtet hintereinander angeordnet sind und jeweils um eine zentrale Drehachse 9, 10 drehbar sind. Die Haupträder 3, 4 sind mittels eines in sich geschlossenen elastischen Raupenbands 5 umspannt. In dem gezeigten Beispiel ist das hintere Hauptrad 4 als aktiv angetriebenes Antriebsrad 11 ausgebildet, sodass die Arbeitsmaschine 2 mittels der Raupenlaufwerke 1 auf dem Untergrund 7 fahrbar ist. Zudem umfasst das Raupenlaufwerk 1 zwei Hilfsräder 13, die - in Längsrichtung des Raupenlaufwerks 1 betrachtet - zwischen den Haupträdern 3, 4 angeordnet sind. Die Hilfsräder 13 sind einem Bodenabschnitt 15 des Raupenbands 5 zugeordnet, wobei der Bodenabschnitt 15 jeweils denjenigen Abschnitt des Raupenbands 5 bezeichnet, der sich bei einem bestimmungsgemäßen Betrieb der Arbeitsmaschine 2 in einem unmittelbaren Kontakt mit dem Untergrund 7 befindet. Die Hilfsräder 13 dienen dazu, über die Raupenlaufwerke 1 abzutragende Lasten in den Untergrund 7 einzuleiten, wobei im Zusammenwirken der Hilfsräder 13 mit den Haupträdern 3, 4 eine gegenüber einem normalen Rundrad geschaffene Aufstandsfläche erheblich vergrößert und mithin eine Flächenpressung des Untergrunds 7 verringert ist.

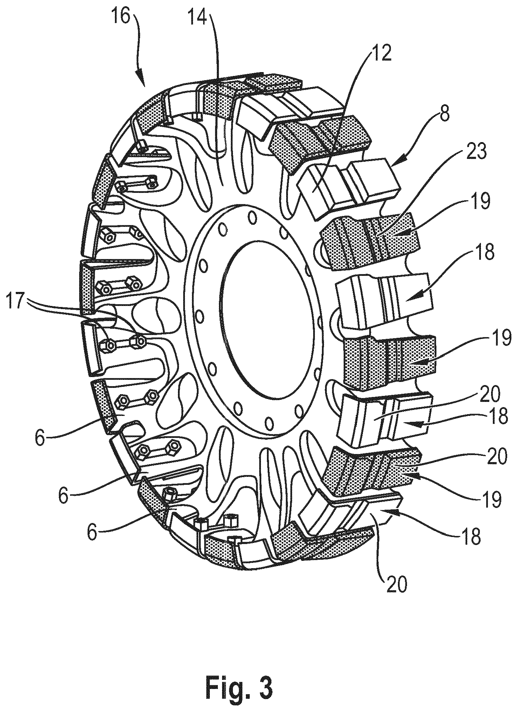

Die Haupträder 3, 4 sind in dem gezeigten Beispiel jeweils von zwei Felgen 16 gebildet, die wiederum jeweils von einer Mehrzahl von Felgensegmente 14 gebildet sind. Dies ergibt sich besonders gut anhand von Figur 3. Die Felgen 16 eines jeweiligen Hauptrades 3, 4 sind in Breitenrichtung bzw. axialer Richtung des Laufwerks 1 betrachtet nebeneinander angeordnet. Die Felgensegmente 14 einer jeweiligen Felge 16 erstrecken sich bezogen auf die jeweils zugehörige Drehachse 9, 10 in radiale Richtung speichenförmig nach außen. Die Felgensegmente 14 umfassen in dem gezeigten Beispiel jeweils zwei radial außenliegende Führungsabschnitte 6, mittels derer das Raupenband 5 entlang des Umfangs des jeweiligen Hauptrades 3, 4 führbar ist. Die Führungsabschnitte 6 der Haupträder 3, 4 sind jeweils mit einer Übertragungseinheit 8 ausgestattet, die in Kraft übertragender Weise an dem jeweiligen Felgensegment 14 angeordnet ist. Dies erfolgt in dem gezeigten Beispiel mittels einer Verschraubung der jeweiligen Übertragungseinheit 8 an dem zugehörigen Felgensegment 14, wobei - wie sich insbesondere anhand von Figur 3 ergibt - die Übertragungseinheiten 8 jeweils zwei bolzenförmige Befestigungsmittel 17 umfassen, die durch zugeordnete Ausnehmungen der Felgensegmente 14 führbar und an einer radseitigen Innenseite des jeweiligen Felgensegments 14 verschraubbar sind.

Die Übertragungseinheiten 8 des Antriebsrads 11 umfassen Reibelemente 18 und verschleißharte Elemente 19. Das Reibelement 18 ist in dem gezeigten Beispiel jeweils aus Gummi gebildet und das verschleißharte Element 19 besteht jeweils aus Aluminium. Die Reibelemente 18 und verschleißharten Elemente 19 treten in unmittelbaren Kontakt mit der Innenseite 22 des Raupenbands 5 und dienen mithin der Kraftabtragung von den Antriebsrad 11 in den Laufgurt 5. Verschleißhart ist im Sinne dieser Anmeldung derart zu verstehen, dass das verschleißharte Element 19 deutlich weniger verschleißanfällig als das Reibelement 18 ist. Das verschleißharte Element 19 weist gegenüber dem Reibelement 18 eine deutlich höhere Festigkeit und Formstabilität auf.

Die Reibelemente 18 und die verschleißharten Elemente 19 umfassen jeweils eine radial außenliegende Kontaktfläche 20 zum kraftschlüssigen Zusammenwirken mit dem Raupenband 5 sowie einen gegenüber der Kontaktfläche 20 abgewinkelten Führschenkel 12. Die Funktion des Führschenkels 12 ergibt sich besonders gut anhand von Figur 2, die an dem Raupenabd 5 mittig an dessen radseitiger Innenseite 22 Führungsklötze 21 zeigt. Diese Führungsklötze 21 dienen dazu, das Raupenband 5 vor einem seitlichen Abrutschen von den Haupträdern 3, 4 zu schützen. Hierzu sind die Führungsklötze 21 zwischen den Felgen 16 des jeweiligen Hauptrades 3, 4 geführt, wobei die einander zugewandten Führschenkel 12 der Übertragungseinheiten 8 jeweils seitliche Anschlagflächen für die Führungsklötze 21 bereitstellen. Die Reibelemente 18 und die verschleißharten Elemente 19 einer Felge 16 erstrecken sich jeweils in axialer Richtung des Antriebsrads 11 entlang der gesamten Breite der jeweiligen Felge 16, sodass sich eine besonders wirksame Kontaktfläche 20 zur Kraftübertragung zwischen dem Raupenband 5 und dem Antriebsrad 11 ergibt.

In der in Figur 3 dargestellten Ausführungsform sind in Umfangsrichtung des Antriebsrads 11 die Reibelemente 18 und verschleißharten Elemente 19 alternierend zueinander angeordnet. In Umfangsrichtung des Antriebsrads 11 folgt somit auf jedes Reibelement 18 ein benachbart zu diesem angeordnetes verschleißhartes Element 19. In einer alternativen Ausführungsform kann in Umfangsrichtung des Antriebsrads 11 auf jeweils zwei benachbart zueinander angeordnete Reibelemente 18 jeweils ein verschleißhartes Element 19 folgen.

Hier und vorzugsweise umfassen die verschleißharten Elemente 19 eine auf ihrer Kontaktfläche 20 ausgebildeten Profilierung. Diese ist in der in Figur 3 gezeigten Ausführungsform als eine Nut 23 ausgebildet, die sich in Umfangsrichtung des Antriebsrads 11 erstreckt. Alternativ können auch mehrere Nuten 23 auf der Kontaktfläche 20 des verschleißharten Elements 19 angeordnet sein.

### Bezugszeichenliste:

- 1: Raupenlaufwerk
- 2: Arbeitsmaschine
- 3: Haupträder
- 4: Haupträder
- 5: Raupenband
- 6: Führungsabschnitt
- 7: Untergrund
- 8: Übertragungseinheit
- 9: Drehachse
- 10: Drehachse
- 11: Antriebsrad
- 12: Führschenkel
- 13: Hilfsrad
- 14: Felgensegment
- 15: Bodenabschnitt
- 16: Felge
- 17: Befestigungsmittel
- 18: Reibelement
- 19: Verschleißhartes Element
- 20: Kontaktfläche
- 21: Führungsklötze
- 22: Innenseite
- 23: Nut

## Patentansprüche

1. Raupenlaufwerk (1) einer landwirtschaftlichen Arbeitsmaschine (2) mit einem Antriebsrad (11) zum Antreiben eines elastischen Raupenbandes (5) des Raupenlaufwerkes (1), wobei radial außen an dem Antriebsrad (11) Reibelemente (18) zum kraftschlüssigen Zusammenwirken mit dem Raupenband (5), insbesondere lösbar, angeordnet sind, wobei radial außen an dem Antriebsrad (11) benachbart zu zumindest einem Reibelement (18) zumindest ein verschleißhartes Element (19) angeordnet ist, wobei das zumindest eine verschleißharte Element (19) gegenüber den Reibelementen (18) eine größere Festigkeit aufweist,
**dadurch gekennzeichnet, dass**
das Antriebsrad (11) zwei in axialer Richtung nebeneinander angeordnete Felgen (16) umfasst, wobei die Felgen (16) jeweils Reibelemente (18) und jeweils zumindest ein verschleißhartes Element (19) umfassen, wobei sich die Reibelemente (18) und das zumindest eine verschleißharte Element (19) einer Felge (16) in axialer Richtung über die gesamte Breite der jeweiligen Felge (16) erstrecken.

2. Raupenlaufwerk (1) nach Anspruch 1, **dadurch gekennzeichnet, dass** das zumindest eine verschleißharte Element (19) aus Metall, insbesondere Aluminium, besteht.

3. Raupenlaufwerk (1) nach Anspruch 1 oder 2, **dadurch gekennzeichnet, dass** die Reibelemente (18) aus Elastomer, insbesondere Gummi, bestehen.

4. Raupenlaufwerk (1) nach einem der Ansprüche 1 bis 3, **dadurch gekennzeichnet, dass** das Antriebsrad (11) eine Mehrzahl von Reibelementen (18) und verschleißharten Elementen (19) umfasst, die in Umfangsrichtung des Antriebsrads (11) abwechselnd zueinander angeordnet sind, wobei vorzugsweise neben zwei benachbarten Reibelementen (18) jeweils ein verschleißhartes Element (19) angeordnet ist, wobei weiter vorzugsweise die Reibelemente (18) und verschleißharten Elemente (19) alternierend zueinander angeordnet sind, sodass in Umfangsrichtung des Antriebsrads (11) auf jedes Reibelement (18) ein verschleißhartes Element (19) folgt.

5. Raupenlaufwerk (1) nach einem der Ansprüche 1 bis 4, **dadurch gekennzeichnet, dass** ausschließlich das Antriebsrad (11) des Raupenlaufwerks (1) verschleißharte Elemente zum Zusammenwirken mit dem Raupenband (5) umfasst.

6. Raupenlaufwerk (1) nach einem der Ansprüche 1 bis 5, **dadurch gekennzeichnet, dass** die verschleißharten Elemente (19) an ihrer mit dem Raupenband (5) zusammenwirkenden Kontaktfläche (20) eine Profilierung, insbesondere eine oder eine Mehrzahl von Nuten (23) umfassen.

## Claims

1. Crawler track (1) of an agricultural working machine (2) with a drive wheel (11) for driving an elastic crawler belt (5) of the crawler track (1), wherein friction elements (18) for force-locking interaction with the crawler belt (5) are arranged, in particular releasably, radially on the outside of the drive wheel (11), wherein at least one wear-resistant element (19) is arranged radially on the outside of the drive wheel (11) adjacent to at least one friction element (18), the at least one wear-resistant element (19) having a greater strength than the friction elements (18),
**characterized in that**
the drive wheel (11) comprises two rims (16) arranged side by side in the axial direction, the rims (16) each comprising friction elements (18) and at least one wear-resistant element (19), the friction elements (18) and the at least one wear-resistant element (19) of a rim (16) extending in the axial direction over the entire width of the respective rim (16).

2. Crawler track (1) according to Claim 1, **characterized in that** the at least one wear-resistant element (19) is composed of metal, in particular aluminium.

3. Crawler track (1) according to Claim 1 or 2, **characterized in that** the friction elements (18) are composed of elastomer, in particular rubber.

4. Crawler track (1) according to any one of Claims 1 to 3, **characterized in that** the drive wheel (11) comprises a plurality of friction elements (18) and wear-resistant elements (19) which are arranged alternately in the circumferential direction of the drive wheel (11), wherein, preferably, a wear-resistant element (19) is in each case arranged next to two adjacent friction elements (18), and, more preferably, the friction elements (18) and wear-resistant elements (19) are arranged alternately to each other such that a wear-resistant element (19) follows each friction element (18) in the circumferential direction of the drive wheel (11).

5. Crawler track (1) according to any one of Claims 1 to 4, **characterized in that** only the drive wheel (11) of the crawler track (1) comprises wear-resistant elements for interaction with the crawler belt (5).

6. Crawler track (1) according to any one of Claims 1 to 5, **characterized in that** the wear-resistant elements (19) on their contact surface (20), which interacts with the crawler belt (5), comprise a profiling, in particular one groove or a plurality of grooves (23) .

## Revendications

1. Mécanisme de roulement à chenille (1) d'une machine agricole (2), comprenant une roue motrice (11) destinée à entraîner une chenille (5) élastique du mécanisme de roulement à chenille (1), des éléments de friction (18) étant disposés, notamment de façon amovible, radialement à l'extérieur sur la roue motrice (11), en vue de la coopération par force avec la chenille (5), au moins un élément résistant à l'usure (19) étant disposé radialement à l'extérieur sur la roue motrice (11), de façon adjacente à au moins un élément de friction (18), l'élément résistant à l'usure (19), au nombre d'au moins un, présentant une plus grande résistance par rapport aux éléments de friction (18),
**caractérisé en ce que**
la roue motrice (11) comprend deux jantes (16) disposées l'une à côté de l'autre dans la direction axiale, les jantes (16) comportant respectivement des éléments de friction (18) et respectivement au moins un élément résistant à l'usure (19), les éléments de friction (18) et l'élément résistant à l'usure (19), au nombre d'au moins un, d'une jante (16) s'étendant dans la direction axiale sur toute la largeur de la jante (16) respective.

2. Mécanisme de roulement à chenille (1) selon la revendication 1, **caractérisé en ce que** l'élément résistant à l'usure (19), au nombre d'au moins un, est en métal, en particulier en aluminium.

3. Mécanisme de roulement à chenille (1) selon la revendication 1 ou 2, **caractérisé en ce que** les éléments de friction (18) sont en élastomère, en particulier en caoutchouc.

4. Mécanisme de roulement à chenille (1) selon une des revendications 1 à 3, **caractérisé en ce que** la roue motrice (11) comprend une pluralité d'éléments de friction (18) et d'éléments résistant à l'usure (19) qui sont disposés en alternance les uns avec les autres dans la direction périphérique de la roue motrice (11), un élément résistant à l'usure (19) étant disposé de préférence respectivement à côté de deux éléments de friction (18) voisins, les éléments de friction (18) et les éléments résistant à l'usure (19) étant en outre disposés de préférence en alternance les uns avec les autres, de sorte que dans la direction périphérique de la roue motrice (11), chaque élément de friction (18) est suivi d'un élément résistant à l'usure (19).

5. Mécanisme de roulement à chenille (1) selon une des revendications 1 à 4, **caractérisé en ce que** seule la roue motrice (11) du mécanisme de roulement à chenille (1) comporte des éléments résistant à l'usure (19), en vue de la coopération avec la chenille (5).

6. Mécanisme de roulement à chenille (1) selon une des revendications 1 à 5, **caractérisé en ce que** les éléments résistant à l'usure (19) présentent un profilage, en particulier une rainure (23) ou une pluralité de rainures, sur leur surface de contact (20) coopérant avec la chenille (5).
